Europäisches Patentamt

European Patent Office

Office européen des brevets

(11) Publication number: **0 056 017**
**A2**

## (12) EUROPEAN PATENT APPLICATION

(21) Application number: **82300079.9**

(22) Date of filing: **07.01.82**

(51) Int. Cl.³: **B 31 B 23/00**
**B 29 C 24/00**

(30) Priority: **07.01.81 ZA 810097**

(43) Date of publication of application:
**14.07.82 Bulletin 82/28**

(84) Designated Contracting States:
**AT BE CH DE FR GB IT LI LU NL SE**

(71) Applicant: BURBELL PACKAGING (PROPRIETARY)
LIMITED
8th Floor, Mobil House Hans Strydom Avenue
Cape Town(ZA)

(72) Inventor: Van Der Merwe, Augustus Andre
588 Sir David Baird Drive
Bloubergstrand Cape Province(ZA)

(74) Representative: Broome, Geoffrey Edward et al,
KILBURN & STRODE 30 John Street
London, WC1N 2DD(GB)

(54) Method and apparatus for manufacturing bags, and bag produced by such method.

(57) A method of producing bags from a tube of plastics sheet material comprises longitudinally welding and cutting a flattened starting tube 10 along its centre so as to form two flattened, longitudinally seamed tubes 16 each having a width of half that of the starting tube. Each longitudinally seamed tube 16 is then folded about a first longitudinal fold line in such a manner that a flattened intermediate tube having four plies throughout its width is formed. The intermediate tube is once more folded, about a second longitudinal fold line, thereby to form a flattened longitudinally seamed and folded tube having eight plies throughout its width. The longitudinally seamed and folded tube is then transversely welded and cut along welding and cutting lines 24 and 26 respectively so as to form a series of bags each of which is open at one end and closed by a weld at the other end.

FIG. 1

FIG. 4

METHOD OF AND APPARATUS FOR MANUFACTURING BAGS,
AND BAG PRODUCED BY SUCH METHOD.


THIS INVENTION relates to a method of and
apparatus for manufacturing bags. It also relates to bags
produced according to the method.

Plastics refuse bags are conventionally made by
welding and cutting a flattened tube of plastics sheet
material, folded only along its two longitudinal sides,
along a series of transverse cutting and welding lines to
form a series of bags which are each open at one end and
closed by a weld at the other end. In bags of this
construction, when loaded, there is a very uneven distribution of stress. In the longitudinal direction, the
stress is greatest along lines extending upwardly from the
centre of the weld at the bottom of the bag, i.e. from
midway between the two corners where the weld line meets
the longitudinal fold lines along which the tube was
folded when still in the flattened condition. The stress
along these lines gradually decreases towards the top of
the bag. Along the longitudinal fold lines there is
relatively little stress near the bottom corners, and the
stress along these lines gradually increases towards the
top of the bag. The stress distribution in a transverse
direction generally follows the same pattern as that in
the longitudinal direction.

Because of such uneven distribution of stress,
refuse bags have conventionally been made from relatively
narrow, seamless tubes having a width (typically about 750
to 800mm) equal to that desired for the bags to be
produced. The reasoning behind this was that longitudinal seams, which had proved to be a source of failure with this type of bag, should be avoided.

Although it is known in the manufacture of relatively small bags, where seam failure is not a problem, to cut and weld a tube longitudinally as well as transversely, so as to produce bags that have longitudinal seams, this practice has not been adopted in the making of refuse bags, because of the problem encountered in these bags with longitudinal seams. Apparatus for producing the transverse cuts and welds, also referred to as bag making machines, operate intermittently, an entire transverse cut and weld (also referred to as a bottom seal) being formed during each operating stroke. These machines are able to produce a relatively strong bottom seal. However, apparatus currently available for producing a longitudinal cut and weld (also referred to as slit sealing) in a tube has to operate continuously as the tube moves past it, and the seal which it forms is relatively weak.

The use of a relatively narrow, seamless tube is not without its disadvantages. One is that a small diameter extruder die has to be used and this limits the capacity (in kg/hr) of the extruder used to produce the tube. It is well known that the ratio of capital cost, operating and maintenance cost and space requirements to the capacity of an extruder increases as the capacity decreases. From this point of view, therefore, it would be advantageous to increase the diameter of the extruder die as much as possible.

It is known from US patent 3 758 024 to manufacture refuse bags of plastics sheet material in a process which comprises folding a flattened tube of the sheet material longitudinally along the centre to form an intermediate tube having four plies throughout its width, folding the intermediate tube once again along the centre to form a flattened, folded tube having eight plies throughout its width, and then cutting and welding the flattened, folded tube along a series of transverse cutting and welding lines to form a series of bags each of which is open at one end and closed by a weld at the other, bottom end.

Applicants have found that the construction described in US patent 3 758 024 so improves the stress distribution in the bags when loaded, that longitudinal seams produced by slit sealing can now be used without encountering many of the difficulties heretofore experienced with such seams.

According to the invention there is provided a method of manufacturing bags in which a flattened, relatively narrow tube of plastics sheet material is folded longitudinally in such a manner that a flattened, longitudinally folded tube having the same number of plies throughout its width is formed, and the flattened, longitudinally folded tube then cut and welded along a series of transverse cutting and welding lines to form a series of bags each of which is open at one end and closed by a weld at the other end; characterised thereby that two or more of the flattened, relatively narrow tubes are formed simultaneously by longitudinally cutting and welding a relatively wide, flattened tube.

The width of each of the flattened, relatively narrow tubes may be between 500 and 1000mm.

Further according to the invention there is provided apparatus for producing bags, which comprises an extruder for producing a flattened tube of plastics sheet material, folding means for folding the flattened tube longitudinally in such a manner that a flattened, longitudinally folded tube having the same number of plies throughout its width is formed, and means for cutting and welding the flattened, longitudinally folded tube along a series of transverse cutting and welding lines to form a series of bags each of which is open at one end and closed by a weld at the other end; characterised thereby that it includes cutting and welding means for longitudinally cutting and welding the relatively wide flattened tube between the extruder and the folding means, to produce simultaneously two or more relatively narrow flattened tubes, each for being folded by the folding means and subsequently cut and welded by the cutting and welding means.

The invention extends to a bag when produced according to the method defined above.

The invention will now be described in more detail, by way of example, with reference to the accompanying diagrammatic drawings in which, for clarity of illustration, the thickness of the material has been greatly exaggerated.

In the drawings:

Figure 1 illustrates a flattened tube of sheet material;

Figure 2 illustrates the tube while in the process of being longitudinally welded and cut to form two long-itudinally seamed tubes;

Figure 3 illustrates one of the longitudinally seamed tubes after a first folding operation; and

Figure 4 illustrates the longitudinally seamed tube of Figure 3 after a second folding operation.

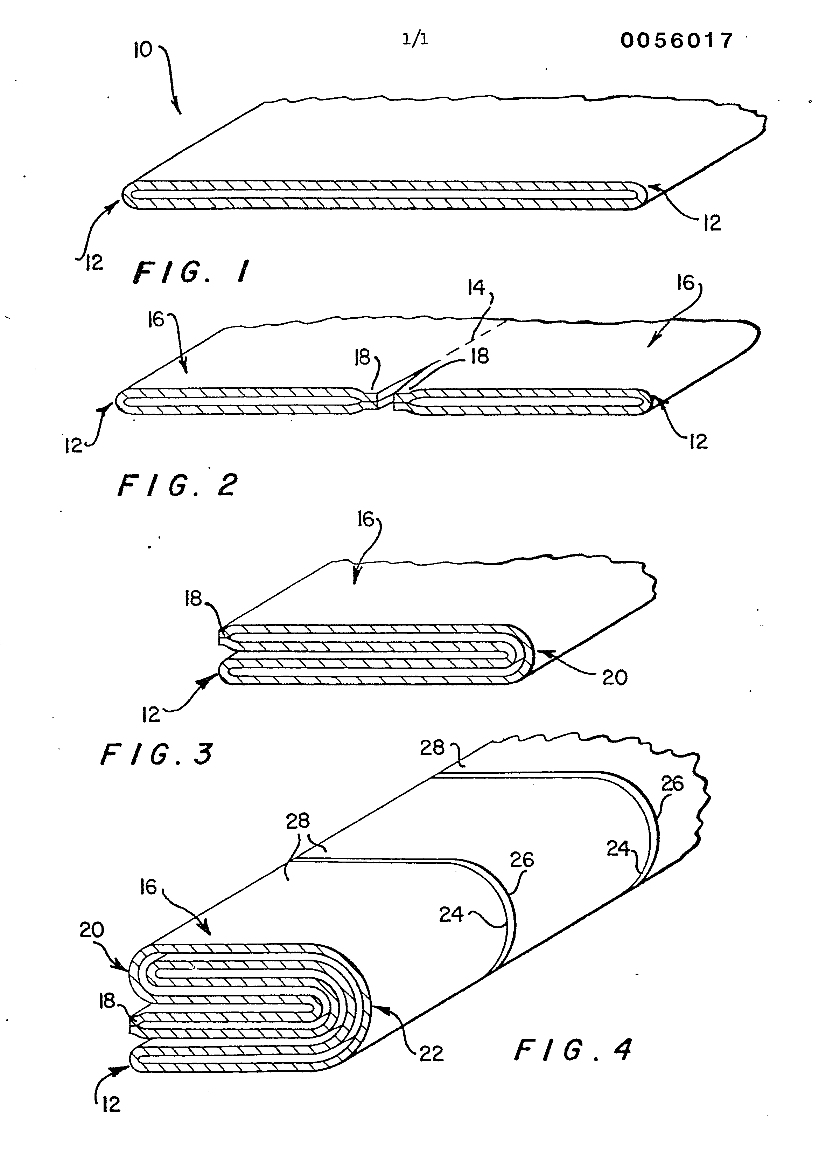

Referring first to Figure 1, reference numeral 10 designates a tube of synthetic plastics material. The tube is produced in conventional fashion in an extruder by extruding the synthetic plastics material in the form of a small diameter, thick-walled tube, expanding the small diameter tube by the introduction of air under pressure into the interior of the tube, and then flattening the resultant large diameter, thin-walled tube to form fold lines 12 along its longitudinal edges. The wall thickness will typically be from 10 to 100 micron and the circumference of the tube about twice that of the bags to be produced, for example 3 metres (or a width of 1500mm) if bags of a width of 750mm are to be produced.

Referring now to Figure 2, the starting tube 10 of Figure 1 is welded and cut along its centre 14 so as to form two tubes 16 each having a width of half that of the starting tube 10, i.e. typically 750mm. This cutting and welding is effected by slit sealing means arranged where the flattened starting tube 10 emerges from the extruder. Each tube 16 has a single longitudinally extending seam 18 where the two sides of the tube are welded together. It is also possible to weld and cut the starting tube along two or more transversely spaced longitudinal welding and cutting lines, in which case the outer two longitudinally seamed tubes thus produced will have a single longitudinal seam, whereas the other longitudinally seamed tube or tubes thus produced will each have two longitudinal seams.

Each longitudinally seamed tube 16 is folded along a first longitudinal fold line 20 in such a manner that a flattened intermediate tube as shown in Figure 3, having four plies throughout its width, is formed. Each such ply will have half the width of the tube 16 when in the condition shown in Figure 2.

- 6 -

The flattened intermediate tube is then folded once more, along a second longitudinal fold line 22, in such a manner that a longitudinally seamed and folded tube as shown in Figure 4, having eight plies throughout its width, is formed. Each such ply will have one quarter the width of the tube 16 when in the condition shown in Figure 2.

The longitudinally seamed and folded tube of Figure 4 is then transversely welded along lines 24 so as to secure all the eight plies together, and transversely cut along lines 26. In this manner a series of bags 28 is formed, each being open at one end and closed at the other. Cutting and welding takes place in a bag making machine.

The fact that the folded tube of Figure 4 has the same number of plies throughout its width will ensure that, in the bag making machine, a uniform weld is effected between the plies throughout the width thereof. Weaknesses which would result from a non-uniform weld are thereby avoided.

The tubes 16, as they emerge from the apparatus which effects the longitudinal slit sealing along line 14, may be reeled prior to being passed through the folding and bag making machines.

1.      A method of manufacturing bags in which a flattened, relatively narrow tube of plastics sheet material is folded longitudinally in such a manner that a flattened, longitudinally folded tube having the same number of plies throughout its width is formed, and the flattened, longitudinally folded tube then cut and welded along a series of transverse cutting and welding lines to form a series of bags each of which is open at one end and closed by a weld at the other end; characterised thereby that two or more of the flattened, relatively narrow tubes are formed simultaneously by longitudinally cutting and welding a relatively wide, flattened tube.

2.      A method as claimed in claim 1, characterised thereby that the width of each of the flattened, relatively narrow tubes is between 500 and 1000mm.

3.      Apparatus for producing bags, which comprises an extruder for producing a flattened tube of plastics sheet material, folding means for folding the flattened tube longitudinally in such a manner that a flattened, longitudinally folded tube having the same number of plies throughout its width is formed, and means for cutting and welding the flattened, longitudinally folded tube along a series of transverse cutting and welding lines to form a series of bags each of which is open at one end and closed by a weld at the other end; characterised thereby that it includes cutting and welding means for longitudinally cutting and welding the relatively wide flattened tube between the extruder and the folding means, to produce simultaneously two or more relatively narrow flattened tubes, each for being folded by the folding means and subsequently cut and welded by the cutting and welding means.

4.      A bag when produced according to claim 1 or
claim 2.

1/1                                              0056017

FIG. 1

FIG. 2

FIG. 3

FIG. 4